# FASCICULE DE BREVET EUROPEEN

(11) **EP 3 144 684 B1**
(45) Date de publication et mention de la délivrance du brevet: **29.04.2020**
(21) Numéro de dépôt: 16188814.4
(22) Date de dépôt: 14.09.2016
(51) Int. Cl.: G01P 13/02

(54) **MESURE DES ECOULEMENTS D'AIR LE LONG D'UNE PAROI**
MESSUNG DER LUFTSTRÖMUNG ENTLANG EINER WAND
MEASUREMENT OF AIR FLOWS ALONG A WALL

(30) Priorité: 15.09.2015 FR 1558599
(43) Date de publication de la demande: 22.03.2017
(73) Titulaire: Airbus SAS, 31700 Blagnac (FR); AIRBUS OPERATIONS (SAS), 31060 Toulouse (FR)
(72) Inventeur: VIALATTE, Jean-Luc, 31300 TOULOUSE (FR); TATRY, Philippe, 31130 BALMA (FR); STUDER, Gilles, 31470 FONSORBES (FR); MALARD, Laurent, 31400 TOULOUSE (FR); BENOIT, Nicolas, 31300 TOULOUSE (FR)
(74) Mandataire: Brevalex

(56) Documents cités:
- EP-A1- 1 739 396
- US-B1- 6 342 846
- G. AZZELLINO ET AL: "Fully Inkjet-Printed Organic Photodetectors with High Quantum Yield", ADVANCED MATERIALS, vol. 25, no. 47, 1 décembre 2013 (2013-12-01), pages 6829-6833, XP055285308, DE ISSN: 0935-9648, DOI: 10.1002/adma.201303473

## Description

### DOMAINE DE L'INVENTION

La présente invention se rapporte au domaine de mesures d'un écoulement d'air et plus particulièrement, concerne une mesure et une visualisation aérodynamiques en temps réel des écoulements d'air le long d'une paroi à des fins de caractérisation de l'écoulement pariétal d'un objet de type véhicule ou aéronef en mouvement dans l'air.

La technique traditionnellement utilisée pour mesurer l'écoulement aérodynamique le long d'une paroi dans le domaine de l'aéronautique consiste en l'observation de fils de laine ou de nylon appelés « tufts » (ou « touffes ») collés par une de leurs extrémités à la paroi. Cependant, ces « tufts » peuvent présenter une instabilité propre sans lien direct avec les caractéristiques de l'écoulement. Ainsi, afin de remédier à ces inconvénients, les « tufts » ont été progressivement remplacés par des cônes d'écoulement en matière plastique appelés « flow cones ». Un cône d'écoulement est rigide, fin, léger et peut être attaché à la paroi au moyen d'un fil en nylon au niveau de l'apex du cône. Sa légèreté lui permet de se mouvoir librement et de s'aligner avec la direction de l'écoulement de l'air.

Ainsi, afin de mesurer l'écoulement aérodynamique sur un aéronef, des cônes d'écoulement sont installés sur des zones de l'aéronef pour lesquelles les analyses sont demandées. Les cônes d'écoulement présentent du fait de leur légèreté des mouvements caractéristiques selon le type de flux aéronautique et dont la forme permet la visualisation dans un enregistrement vidéo. Ces cônes d'écoulement sont filmés par des caméras embarquées dont les enregistrements permettent une exploitation des données en temps réel ou en temps différé.

Toutefois, cette technique ne permet pas l'étude des zones masquées où l'instrumentation est difficile ou même impossible à installer comme par exemple sur la partie de dessous de l'aéronef. En outre, elle ne permet pas de mesurer avec précision la direction de l'écoulement sur la paroi et par conséquent, ne permet pas d'avoir un critère objectif de l'état de l'écoulement.

Pour une caractérisation plus globale de l'écoulement aérodynamique sur un aéronef, la NASA a mis au point une technique d'injection d'un fluide contenant un traceur et un solvant, pendant une phase stabilisée du vol. Le frottement à la paroi va entraîner ce fluide suivant des lignes dont la géométrie dépend des conditions d'écoulement. L'évaporation du solvant pendant que les conditions de vol sont maintenues constantes (durant une à deux minutes) va permettre au traceur de se figer. Une fois au sol, toutes les observations nécessaires pourront être réalisées. Cette technique est décrite par D. Fisher et al., dans le document intitulé « In flight flow visualisation characteristics of the NASA F18 high Alpha research vehicule at high angle of attack », NASA technical memo 4193, May 1990.

Toutefois, la technique par injection et séchage d'un traceur en vol ne donne pas accès à une visualisation en temps réel de l'écoulement et de plus, ne permet de caractériser qu'un seul point d'essai par vol.

US 6 342 846 B1 décrit un dispositif de mesure de l'angle d'attaque d'une aile d'avion. Le dispositif comporte un arrangement annulaire de photodétecteurs disposé en regard d'un arrangement annulaire de diodes électroluminescentes. Un masque circulaire à fenêtres est entreposé mobile entre les photodétecteurs et les diodes électroluminescentes. Une girouette est couplée au masque, la girouette étant configurée pour s'aligner à un flux d'air incident. Le dispositif permet de mesurer l'alignement relatif entre le système formé par la girouette et le masque et le système formé par l'arrangement de photodétecteurs et par l'arrangement de diodes électroluminescentes, et ainsi de déterminer un angle d'attaque d'une aile d'avion.

EP 1 739 396 A1 décrit un dispositif de mesure de la vitesse et de la direction d'écoulement d'un fluide. Le dispositif comporte une hélice entraînée par le fluide et un encodeur couplé à l'hélice. Selon un exemple, l'encodeur a la forme d'un disque avec plusieurs ouvertures sous forme de secteurs angulaires. Une source optique est couplée à une fibre qui est utilisée pour éclairer l'encodeur ainsi qu'un miroir disposé derrière l'encodeur. Si la fibre éclaire une ouverture de l'encodeur, la lumière est réfléchie par le miroir et recouplée dans la fibre, et est dirigée vers un détecteur optique. Si la fibre éclaire une partie opaque de l'encodeur, aucune lumière est recouplée dans la fibre. L'évaluation du signal du détecteur permet de déterminer la vitesse et la direction de rotation de l'hélice et donc la vitesse et la direction d'écoulement du fluide qui l'entraîne.

L'objet de la présente invention est par conséquent de remédier aux inconvénients précités en proposant un dispositif de mesure d'écoulement d'air précis, et un système de mesure global et en temps réel de l'écoulement aérodynamique sur une paroi tout en permettant de réaliser la mesure sur toutes les zones d'une paroi et de manière récurrente.

### OBJET ET RÉSUMÉ DE L'INVENTION

La présente invention vise à mettre en œuvre un dispositif de mesure d'un écoulement d'air, comportant :
- un capteur optique configuré pour mesurer une répartition de l'éclairement sur une surface libre dudit capteur optique, et
- une pièce montée mobile sur ledit capteur optique en recouvrant partiellement sa surface libre, ladite pièce, appelée pièce mobile, étant adaptée pour s'orienter librement selon l'écoulement d'air local modulant ainsi la répartition de l'éclairement sur ladite surface libre de sorte qu'une mesure courante par le capteur optique de la répartition de l'éclairement indique l'orientation courante de ladite pièce mobile représentative de l'écoulement courant d'air.

Ce dispositif permet de réaliser de manière faiblement intrusive des mesures en temps réel sur toutes les zones de la paroi et de manière récurrente. Ainsi, dans le cas où la paroi appartient à un aéronef, les mesures peuvent être réalisées sur toutes les zones de l'aéronef. Il n'est plus nécessaire d'avoir en visuel la zone aérodynamique analysée ou de visualiser à l'aide d'une caméra la pièce mobile indiquant l'état aérodynamique. En outre, ce dispositif utilise l'illumination ambiante naturelle et ne nécessite aucun dispositif supplémentaire de source lumineuse.

Avantageusement, le capteur optique comprend un photo-détecteur en forme d'anneau constitué d'un nombre prédéterminé de pistes détectrices de lumière et délivrant des signaux représentatifs de l'éclairement reçu par chacune des pistes générant ainsi la mesure de la répartition de l'éclairement sur la surface libre du capteur optique.

Avantageusement, le capteur optique est constitué de composants électroniques organiques imprimés et en ce que ledit capteur optique présente une précision de mesure angulaire de l'ordre de 1° à 5°.

Selon l'invention, la pièce mobile comporte une partie plane recouvrant une partie de la surface libre du capteur optique. La partie plane a la forme d'un secteur angulaire délimité par deux rayons formant entre eux un angle supérieur à 5°. Ledit angle est avantageusement égal à 180°.

Selon l'invention, la pièce mobile comporte une ailette disposée perpendiculairement sur la partie plane.

Selon l'invention, le capteur optique est configuré pour détecter un éclairement en lumière ambiante. En particulier, le capteur optique présente une sensibilité de détection lumineuse selon une plage d'environ 100 lux à 100000 lux.

L'invention vise également un module de mesure comprenant un ou plusieurs dispositif(s) de mesure selon l'une quelconque des caractéristiques précédentes.

Avantageusement, ledit module de mesure comporte un substrat sur lequel est disposé le ou les dispositif(s) de mesure.

L'invention vise aussi un système de mesure aérodynamique en temps réel des écoulements d'air le long d'une paroi, comportant au moins un module de mesure, chaque module de mesure étant adapté pour être installé selon une position prédéterminée sur une zone d'intérêt de ladite paroi de sorte que les mesures générées par le ou les capteur(s) optique(s) appartenant au module de mesure sont représentatives de l'aérodynamique de la paroi.

Avantageusement, le système comporte des unités d'acquisition et de traitement configurées pour acquérir la mesure courante de chaque capteur optique et pour la transformer en une mesure numérique courante définissant l'orientation courante de la pièce mobile montée sur le capteur optique correspondant.

Avantageusement, le système comporte un dispositif d'émission configuré pour émettre en temps réel des données relatives aux orientations d'au moins une pièce mobile montée sur au moins un capteur optique appartenant au module de mesure.

Avantageusement, le système comporte une interface de visualisation configurée pour visualiser en temps réel les orientations d'au moins une pièce mobile appartenant au module de mesure.

Avantageusement, le système comporte un dispositif d'analyse configuré pour déterminer des paramètres aérodynamiques de la paroi comprenant l'état de l'écoulement pariétal et la direction des lignes de courant pariétales en fonction de la position du module de mesure et orientations d'au moins une pièce mobile appartenant au module de mesure.

Ainsi, le système permet de déterminer la direction de l'écoulement sur la paroi et pas uniquement l'état aérodynamique.

L'invention vise également un aéronef comportant un système de mesure selon l'une quelconque des caractéristiques précédentes.

### BRÈVE DESCRIPTION DES DESSINS

D'autres particularités et avantages du système et du procédé selon l'invention ressortiront mieux à la lecture de la description faite ci-après, à titre indicatif mais non limitatif, en référence aux dessins annexés sur lesquels :
- la Fig. 1A illustre de manière schématique un dispositif de mesure d'un écoulement d'air, selon l'invention ;
- la Fig. 1B illustre de manière schématique un système de mesure d'un écoulement d'air le long d'une paroi, selon un mode de réalisation de l'invention ;
- la Fig. 2 illustre de manière schématique un dispositif de mesure d'un écoulement d'air, selon un mode de réalisation de l'invention ;
- la Fig. 3 illustre de manière schématique une pièce mobile montée sur un capteur optique, selon un mode de réalisation de l'invention ;
- la Fig. 4 illustre de manière schématique différentes formes d'ailettes, selon différents modes de réalisation de l'invention ;
- les Fig. 5A-8B illustrent de manière schématique différentes formes de pièces mobiles, selon différents modes de réalisation de l'invention ;
- la Fig. 9 illustre de manière schématique un modèle électrique d'un dispositif de mesure, selon un mode de réalisation de l'invention ;
- la Fig. 10 illustre de manière schématique une distribution graphique des intensités de courant délivrées par le dispositif de mesure en fonction de l'orientation d'une pièce mobile de type demi-disque, selon un mode de réalisation de l'invention ;
- la Fig. 11 illustre de manière schématique le modèle électrique de la Fig. 8 muni d'un amplificateur, selon un mode de réalisation de l'invention ;
- la Fig. 12 illustre de manière schématique un module de mesure comprenant au moins un dispositif de mesure, selon un mode de réalisation de l'invention ;
- la Fig. 13 illustre de manière schématique un système de mesure aérodynamique des écoulements d'air le long d'une paroi, selon un mode de réalisation de l'invention ; et
- les Figs. 14A et 14B illustrent de manière schématique un module de mesure installé sur un aéronef, selon un mode de réalisation de l'invention.

### DESCRIPTION DÉTAILLÉE DE MODES DE RÉALISATION

Le principe de l'invention consiste à mettre en œuvre un système de mesure de l'écoulement d'air basé sur un capteur optique et faiblement intrusif permettant de mesurer et visualiser en temps réel l'aérodynamique d'une paroi en mouvement relatif par rapport à l'air.

On notera que l'invention concerne tout objet en mouvement dans l'air ou soumis à un écoulement d'air et peut s'appliquer à un aéronef, un train, une voiture, un bateau, une soufflerie, etc.

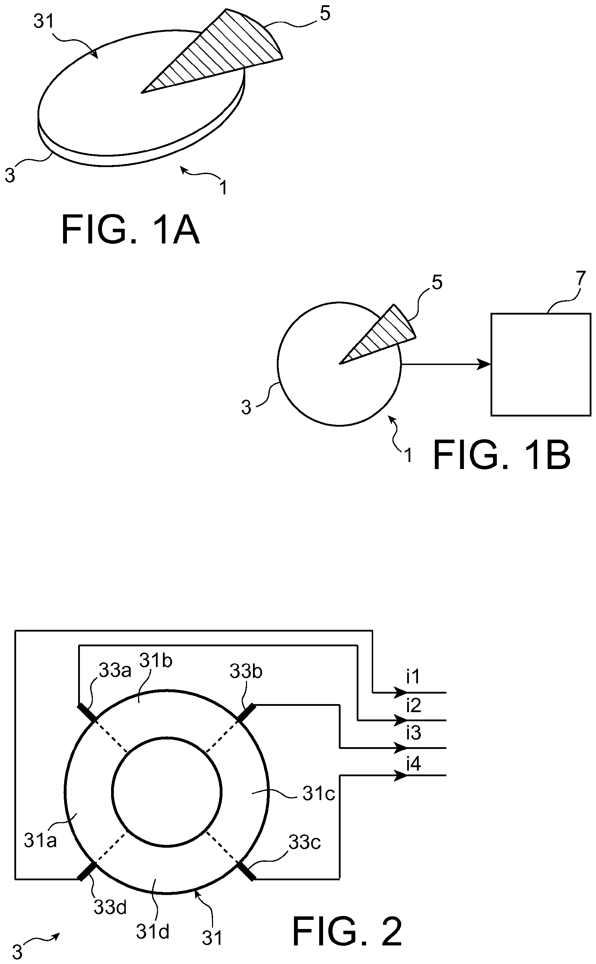

La Fig. 1A illustre de manière schématique un dispositif de mesure d'un écoulement d'air, selon l'invention.

Conformément à l'invention, le dispositif 1 de mesure comporte un capteur optique 3 et une pièce mobile 5.

Le capteur optique 3 a une surface libre 31 adaptée pour être éclairée par des flux lumineux ambiants tout en étant photosensible à la répartition de l'éclairement. Le capteur optique 3 est ainsi configuré pour mesurer la répartition de l'éclairement sur sa surface libre 31. Plus particulièrement, le capteur optique est configuré pour détecter un éclairement en lumière ambiante avec une sensibilité de détection lumineuse d'environ 100 lux à 100000 lux. Ceci permet de couvrir des essais sur un aéronef à proximité du sol avec le capteur recevant un éclairement indirect, jusqu'à des essais en forte luminosité en altitude en éclairement directe.

Par ailleurs, la pièce 5 est montée mobile sur le capteur optique en recouvrant partiellement la surface libre 31 du capteur. Cette pièce, appelée pièce mobile 5 masque ainsi une partie de la surface libre 31 du capteur optique 3. En outre, la pièce mobile 5, est un élément léger qui est configuré pour suivre l'aérodynamique locale en s'orientant librement selon l'écoulement d'air local ou le type de flux aérodynamique qui lui est appliqué. La répartition de l'éclairement sur la surface libre du capteur optique dépend donc de la position angulaire ou l'orientation de la pièce mobile. Autrement dit, le mouvement de la pièce mobile 5 modifie ou module la répartition de l'éclairement sur la surface libre du capteur optique et par conséquent, une mesure courante par le capteur optique de la répartition de l'éclairement indique l'orientation courante de la pièce mobile sachant que cette orientation courante est représentative de l'écoulement courant de l'air.

La Fig. 1B illustre de manière schématique un système de mesure d'un écoulement d'air le long d'une paroi, selon un mode de réalisation de l'invention.

Le système de mesure comporte au moins un dispositif 1 de mesure selon la Fig. 1A et des unités 7 d'acquisition et de traitement. Le dispositif 1 de mesure est adapté pour être installés sur une paroi 9 et pour générer des mesures courantes de la répartition de l'éclairement sur la surface libre du capteur optique. Les unités 7 d'acquisition et de traitement sont configurées pour acquérir chaque mesure courante faite par le capteur optique afin de la transformer en une mesure numérique courante indiquant l'orientation courante de la pièce mobile qui est représentative de l'écoulement de l'air le long de la paroi. Les mesures numériques comportent un nombre limité de données (i.e. principalement, l'orientation de chaque pièce mobile) et peuvent donc être facilement transmises en temps réel à un centre d'analyse pour analyser l'aérodynamique de la paroi. De plus, le nombre limité de données numériques ne nécessite pas d'avoir une large bande passante de transmission.

La Fig. 2 illustre de manière schématique un capteur optique, selon un mode de réalisation de l'invention.

Selon ce mode de réalisation le capteur optique 3 comprend un photo-détecteur 31 en forme d'anneau photosensible constitué d'un nombre prédéterminé de pistes 31a-31d détectrices de lumière. Ces pistes délivrent des signaux représentatifs de l'éclairement reçu par chacune des pistes générant ainsi la mesure de la répartition de l'éclairement sur la surface libre du capteur optique.

Plus particulièrement, selon l'exemple de la Fig. 2, le photo-détecteur 31 est réalisé en composants électroniques organiques imprimés et comporte quatre connexions d'extractions 33a-33d de courant reliées selon un espacement régulier à l'anneau photosensible 31 de sorte que chaque partie entre deux connexions d'extractions consécutives forme une piste détectrice de lumière. En effet, l'électronique organique permet de réaliser des mesures différentielles et ainsi, chaque connexion d'extraction 33a-33d peut être associée à une piste 31a-31d correspondante. Alors, les signaux délivrés par les pistes correspondent ici à des intensités de courants i1-i4 débités par les connexions d'extraction 33a-33d. Chaque intensité de courant i1-i4 est représentative de l'éclairement reçu par la piste 31a-31d correspondante.

En outre, les composants électroniques organiques permettent au capteur optique 3 d'être flexible et de faible épaisseur (par exemple, inférieure à 1 mm).

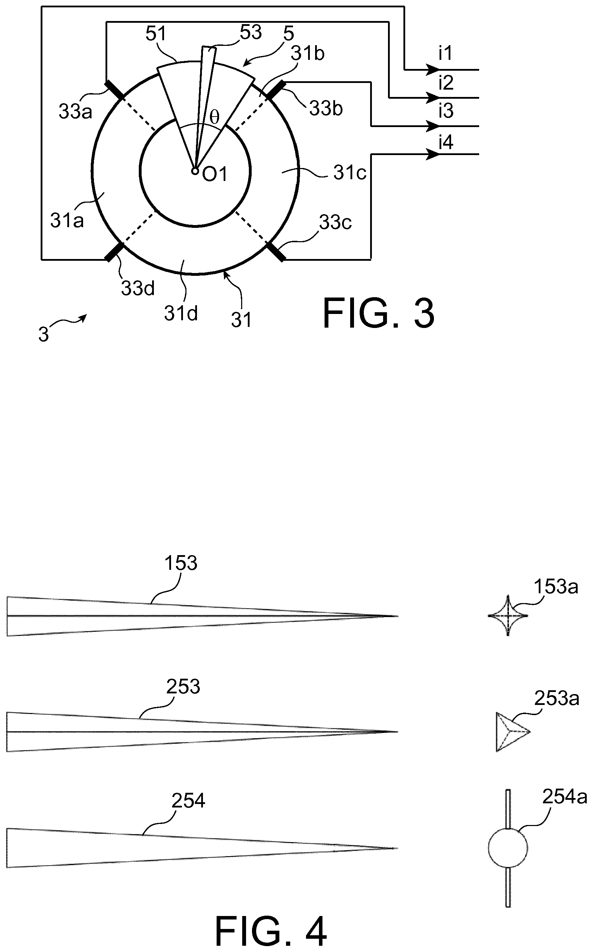

La Fig. 3 illustre de manière schématique un dispositif de mesure d'un écoulement d'air, selon un mode de réalisation de l'invention.

Le dispositif de mesure comporte une pièce mobile montée sur un capteur optique. La pièce mobile 5 comporte une partie plane 51 recouvrant une partie de la surface libre du capteur optique 3.

Avantageusement, la partie plane a la forme d'un secteur angulaire (i.e. secteur de disque) délimité par deux rayons formant entre eux un angle de mesure θ prédéterminé. A titre d'exemple, l'angle θ est supérieur à 5° et peut par exemple être compris entre 5° et 180°. On notera que la partie plane 51 de la pièce mobile 5 permet de minimiser la fuite lumineuse sous la pièce mobile 5 afin d'avoir un contraste optimal entre la zone masquée et celle exposée à la lumière.

La partie plane 51 de la pièce mobile 5 est montée mobile selon un axe de rotation centré au centre 01 de l'anneau photosensible 31. La partie de l'anneau photosensible 31 recouverte par la pièce mobile 5 est masquée et ne reçoit donc pas de lumière tandis que la partie complémentaire est exposée à la lumière. Ainsi, la position angulaire de la pièce mobile 5 affecte la distribution de l'éclairement sur les différentes pistes 31a-31d de l'anneau photosensible 31 et par conséquent, les valeurs d'intensités de courant i1-i4 délivrées par les connexions d'extractions 33a-33d sont également affectées par la position angulaire de la pièce mobile 5. Alors, en connaissant les intensités de courant i1-i4 délivrées par le capteur optique 3 on peut facilement déduire la position angulaire de la pièce mobile 5.

Avantageusement, la pièce mobile 5 comporte une ailette 53 disposée le long d'un rayon central du secteur angulaire et perpendiculairement à la partie plane 51 permettant ainsi de faciliter la rotation de la pièce mobile 5 selon la direction de l'écoulement. L'ailette 53 peut avoir la forme d'un prisme ou être de forme parallélépipédique avec une section droite (i.e. dans un plan perpendiculaire à la partie plane 51 et au rayon central) de forme triangulaire, étoilée, rectangulaire ou d'une toute autre forme adaptée.

La Fig. 4 illustre de manière schématique, différentes formes d'ailettes, selon différents modes de réalisation de l'invention.

Les ailettes 153, 253 et 354 représentées sur l'exemple de la Fig. 4 ont une forme divergente mais avec des sections 153a, 253a, 354a différentes. En effet, la section 153a de l'ailette 153 présente une forme étoilée ou plus particulièrement une forme de quadrilatère régulier ayant des côtés courbés et concaves. La section 253a de l'ailette 253 est un triangle équilatéral. La section 353a de l'ailette 353 présente la forme d'un cercle avec deux excroissances droites et diamétralement opposées.

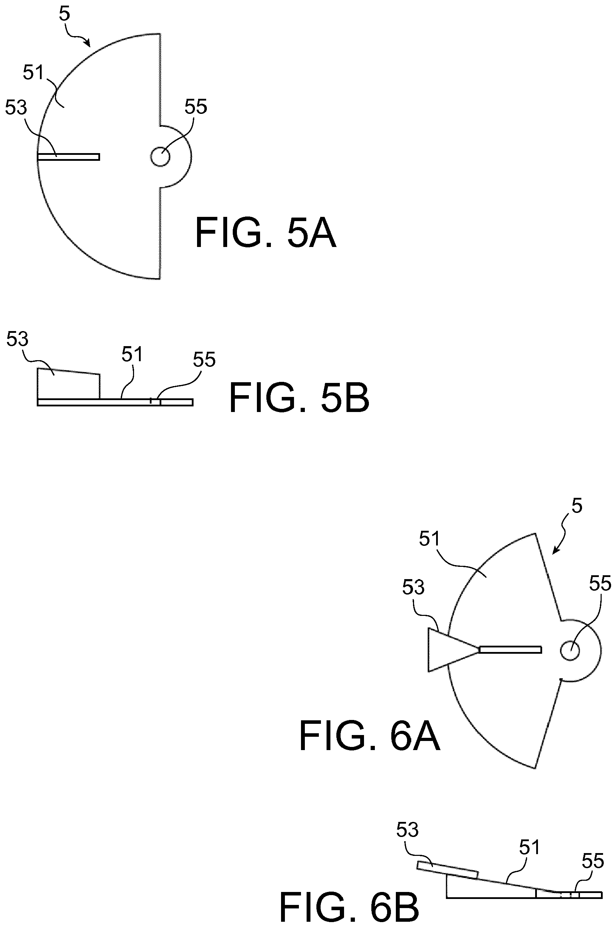

Les Fig. 5A-8B illustrent de manière schématique, différentes formes de pièces mobiles, selon différents modes de réalisation de l'invention.

La Fig. 5A illustre une pièce mobile 5 dont la partie plane 51 a la forme d'un demi-disque comportant un aileron 53 de forme quasi parallélépipédique au niveau d'un rayon central du demi-disque. En outre, la pièce mobile 5 comporte un trou 55 au niveau du centre du demi-disque lui permettant d'être fixée de manière rotative sur le capteur optique 3. La Fig. 5B est une vue en coupe le long du rayon central du demi-disque montrant une section de l'aileron 53 en forme trapézoïdale.

La Fig. 6A illustre une pièce mobile 5 dont la partie plane 51 a la forme d'un secteur angulaire délimité par deux rayons formant entre eux un angle θ inférieur à 180° mais supérieur à 90°. La pièce mobile 5 comporte un aileron 53 au niveau du rayon central du secteur angulaire. L'aileron 53 présente une section triangulaire dans un plan parallèle à la partie plane 51. De même, la pièce mobile 5 comporte un trou 55 au niveau du sommet du secteur angulaire lui permettant d'être fixée de manière rotative sur le capteur optique 3. La Fig. 6B est une vue en coupe le long du rayon central montrant une section droite de l'aileron 53 en forme rectangulaire et une section droite de la partie plane 51 en forme triangulaire.

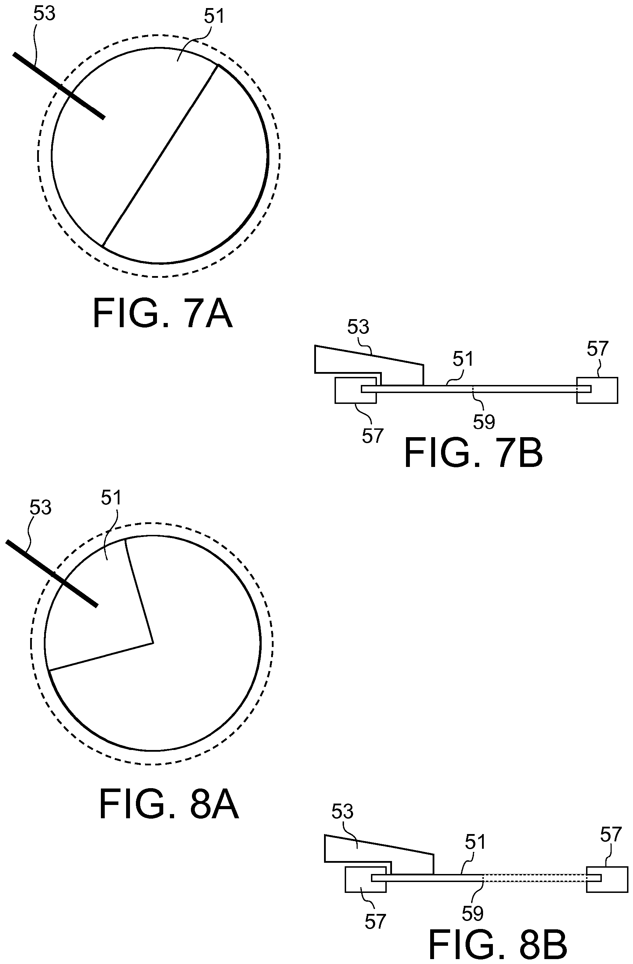

La Fig. 7A illustre une pièce mobile 5 dont la partie plane 51 a la forme d'un demi-disque glissant de manière rotative dans une gouttière 57 autour du centre 59 du demi-disque. La pièce mobile 5 comporte un aileron 53 en forme de poignée au niveau du rayon central du demi-disque. La Fig. 7B est une vue en coupe le long du rayon central du demi-disque montrant une section en forme quasi trapézoïdale de l'aileron 53.

La Fig. 8A illustre une pièce mobile 5 dont la partie plane 51 a la forme d'un secteur angulaire délimité par deux rayons formant entre eux un angle θ inférieur à 90°. La partie plane 51 est configurée pour glisser de manière rotative autour du centre 59 du secteur angulaire dans une gouttière 57. La pièce mobile 5 comporte un aileron 53 en forme de poignée au niveau du rayon central du secteur angulaire. La Fig. 8B est une vue en coupe le long du rayon central du secteur angulaire montrant une section de l'aileron 53 en forme quasi trapézoïdale.

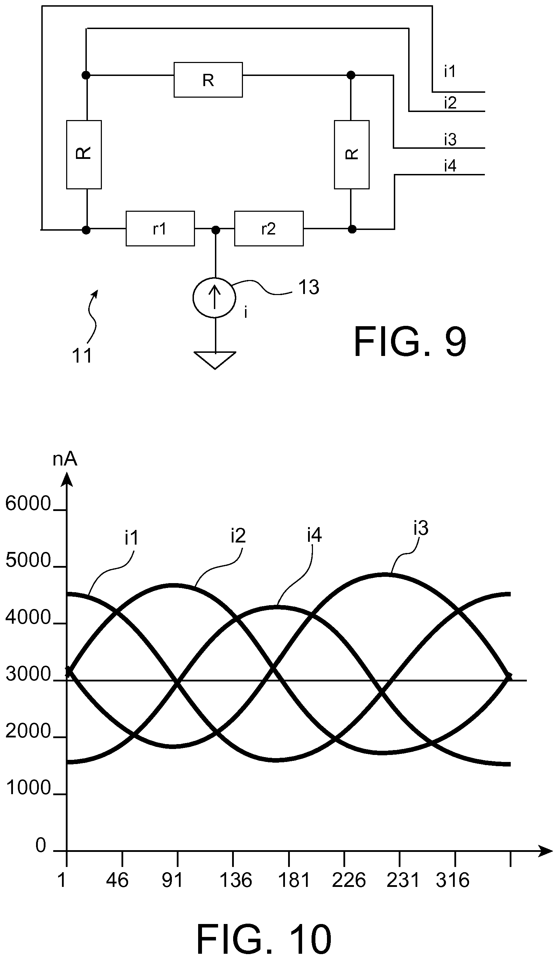

La Fig. 9 illustre de manière schématique un modèle électrique d'un dispositif de mesure, selon un mode de réalisation de l'invention.

En effet, un dispositif de mesure comprenant un capteur optique muni d'une pièce mobile selon l'exemple de la Fig. 3, peut être modélisé par un circuit électrique 11. Ce circuit électrique 11 comporte un générateur 13 de courant électrique, des résistances constantes R et des résistances variables r₁ et r₂. En effet, la lumière incidente sur le capteur optique 3 se comporte comme un générateur 13 de courant électrique dont l'intensité varie en fonction de l'éclairement reçu. Le photo-détecteur 31 du capteur optique 3 peut être assimilé à un réseau de conducteurs ohmiques constants R et variables r₁ et r₂. Les valeurs résistives des conducteurs ohmiques variables r₁ et r₂ dépendent de la répartition de l'éclairement lumineux sur la surface libre du capteur optique 3. C'est la pièce mobile 5 à la surface libre du capteur optique, qui est responsable de cette répartition. En conséquence, les courants i1, i2, i3 et i4 prélevés aux bornes du capteur optique 3 par les quatre connexions d'extractions 33a-33d, sont eux-mêmes fonction de la position angulaire de la pièce mobile 5.

La Fig. 10 illustre de manière schématique une distribution graphique des intensités de courant délivrées par le capteur optique en fonction de l'orientation d'une pièce mobile de type demi-disque.

Plus particulièrement, le graphique de la Fig. 10 est relatif au modèle électrique de la Fig. 9 d'un capteur optique 3 muni d'une pièce mobile 5 de type demi-disque de la Fig. 5A ou 7A. Ce graphique donne les valeurs des intensités de courants i1, i2, i3 et i4 en nA délivrées par les quatre connexions d'extractions 33a-33d en fonction de l'orientation en degré de la pièce mobile 5. Ainsi, en ayant préalablement enregistré ce graphique et en connaissant les valeurs courantes des quatre intensités de courants i1, i2, i3 et i4, l'unité 7 d'acquisition et de traitement (fig. 1B) peut facilement déduire l'orientation courante de la pièce mobile 5.

On notera que le capteur optique 3 présente une précision de mesure angulaire de l'ordre de 1° à 5°. Avantageusement, la précision de mesure angulaire est de l'ordre de 1° lorsqu'on utilise une pièce mobile 5 de type demi-disque recouvrant la moitié du capteur optique 3 et n'ayant pas de fuite lumineuse sous la pièce mobile afin d'avoir un contraste optimal entre la zone masquée et celle exposée à la lumière. On notera que l'utilisation d'une pièce mobile 5 de type demi-disque permet d'utiliser le capteur optique 3 sur toute sa plage de réponse.

Toutefois, les intensités de courants i1, i2, i3 et i4 générées par le capteur optique 3 sont assez faibles et ainsi, il est avantageux d'utiliser un amplificateur afin de les amplifier.

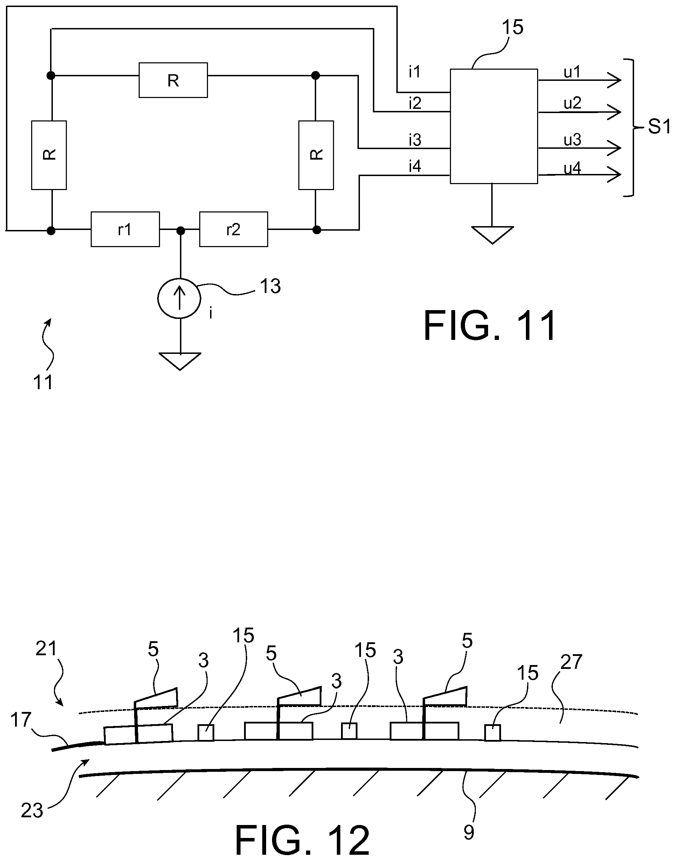

En effet, la Fig. 11 illustre de manière schématique le modèle électrique de la Fig. 9 muni d'un amplificateur.

Les intensités de courants i1, i2, i3 et i4 générées par le capteur optique 3 sont amplifiées par l'amplificateur 15 et éventuellement converties en tensions électriques u1, u2, u3 et u4. Ces tensions électriques u1, u2, u3 et u4 correspondent à un signal électrique S1 qui découle ou qui est à l'image des intensités de courants i1, i2, i3 et i4 débitées par le capteur optique 3. Ce signal électrique S1 est transporté par une nappe de fils vers les unités 7 d'acquisition et de traitement.

La Fig. 12 illustre de manière schématique un module de mesure comprenant au moins un dispositif de mesure, selon un mode de réalisation de l'invention.

Ce module 21 de mesure correspond à un patch comprenant un substrat 23 sur lequel est disposé au moins un dispositif de mesure selon les différents modes de réalisations ci-dessus.

Plus particulièrement, l'exemple de la Fig. 12 illustre un module 21 de mesure comprenant un substrat 23 sur lequel sont disposées une pluralité de capteurs optiques 3 munis des pièces mobiles 5, une pluralité d'amplificateurs 15, et des connexions électriques ou une nappe de fils électriques 17. Avantageusement, le module 21 de mesure comporte un repère de référence de sorte que lorsqu'il est installé sur une paroi 9, la position de ce repère de référence est déterminée par rapport au repère de la paroi 9.

Avantageusement, le capteur optique 3, la pièce mobile 5 et le substrat sont flexibles et présentent une faible épaisseur. A titre d'exemple, le capteur optique comprenant la pièce mobile 5 présente une épaisseur inférieure à 2 mm, et le substrat 23 présente une épaisseur inférieure à 0,5 mm et de préférence de l'ordre 0,2 mm. Ainsi, le module de mesure peut être installé de manière faiblement intrusive sur une paroi de toute forme en s'adaptant facilement à toute éventuelle courbure de la paroi et sans perturber l'écoulement d'air le long de la paroi 9.

En outre, le substrat 23 est adapté pour être collé par exemple au moyen d'un ruban adhésif double face sur la surface d'une paroi 9 et ainsi il est aisé de l'installer sur tout type de surface qui peut être plane ou courbée. En outre, le substrat flexible 23 présente une tenue aux UV, aux variations de températures, aux variations de pressions, etc. pour par exemple être compatible avec une application sur un aéronef.

Les capteurs optiques 3 fabriqués en matière organique sont collés ou intégrés au substrat flexible 23. Par ailleurs, les amplificateurs 15 qui peuvent être fabriqués en silicium, sont également collés ou intégrés au substrat flexible 23. Les amplificateurs 15 peuvent être installés soit entre les capteurs optiques 3 soit aux centres des capteurs optiques 3 correspondants (i.e. au niveau des parties centrales des anneaux photodétecteurs 31). Chaque amplificateur 15 fonctionne en courant-tension et est configuré pour générer le signal électrique S1 (i.e. u1-u4) en amplifiant les intensités de courants i1-i4 délivrées par le capteur optique 3 correspondant.

Les nappes de fils 17 électriques sont adaptées pour transmettre les intensités de courants issues des capteurs optiques 3 aux amplificateurs 15 correspondants et pour collecter les signaux électriques issus des amplificateurs 15 afin de les transmettre aux unités 7 d'acquisition et de traitement. Avantageusement, les fils électriques sont collés aux capteurs optiques 3 et amplificateurs 15 au moyen d'une colle à l'argent pour faciliter la conduction électrique. La colle à l'argent évite l'utilisation des interfaces d'entrée/sortie qui sont généralement épaisses. Ainsi, le module 21 de mesure garde une faible épaisseur.

Avantageusement, le substrat flexible 23, les capteurs optiques 3, les amplificateurs 15, et les nappes de fils 17 électriques sont recouverts d'un vernis 27 protecteur, relativement souple, transparent, potentiellement polarisable, et présentant une tenue à l'humidité, aux UV, aux variations de températures, aux variations de pressions, etc. pour être compatible avec une application sur un aéronef.

Les pièces mobiles 5 sont montées de manière rotative sur les capteurs optiques 3 correspondants et bien entendu, au-dessus de la couche de vernis 27. Les pièces mobiles 5 peuvent ainsi glisser sur la couche de vernis 27. On notera que les pièces mobiles 5 (et par conséquent, les capteurs optiques 3) sont disposées de manière à ne pas se perturber les unes avec les autres en terme aérodynamique local. A titre d'exemple, le diamètre de chaque capteur optique 3 peut être de l'ordre de 10 mm et la distance entre les centres de deux capteurs optiques 3 voisins peut être de l'ordre de 80 mm à 100 mm. Les capteurs optiques 3 peuvent être placés de manière matricielle sur le substrat flexible 23.

Ce module 21 de mesure permet de réduire le nombre de connexions et de circuits électriques et en plus permet d'installer une pluralité de capteurs optiques 3 de manières précise et rapide. Bien entendu, des dispositifs de mesure (capteurs optiques 3 munis des pièces mobiles 5) peuvent aussi être collés directement de manière individuelle sur la surface de la paroi 9 à analyser.

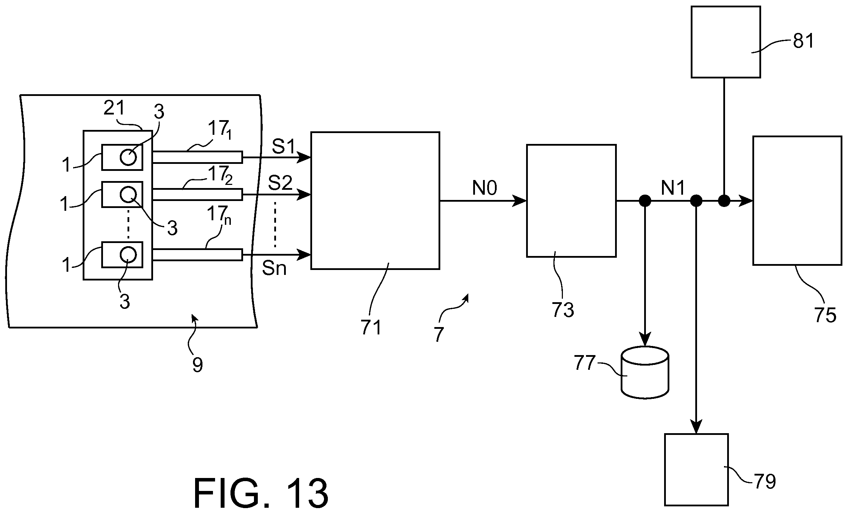

La Fig. 13 illustre de manière schématique un système de mesure aérodynamique des écoulements d'air le long d'une paroi, selon un mode de réalisation de l'invention.

Le système de mesure comporte un module de mesure 21 et des unités 7 d'acquisition et de traitement connectées aux différents capteurs optiques par des nappes de fils électriques. On notera qu'en variante, les unités 7 d'acquisition et de traitement peuvent être intégrées dans le module de mesure.

Selon cet exemple, le module de mesure 21 comporte une pluralité de dispositifs 1 de mesure. Le module de mesure 21 est adapté pour être installé selon une position prédéterminée sur une zone d'intérêt d'une paroi 9 de sorte que les mesures générées par le ou les capteur(s) optique(s) 3 appartenant au module de mesure 21 sont représentatives de l'aérodynamique de la paroi 9.

Ainsi, un ensemble de n nappes de fils 17₁-17ₙ provenant d'un ensemble de n capteurs optiques 3 est adapté pour transporter des signaux électriques S1-Sn déclenchés par les capteurs optiques vers les unités 7 d'acquisition et de traitement. Avantageusement, l'électronique d'acquisition et de traitement peut être réalisée sur une seule carte ou boîte électronique comprenant une unité d'acquisition 71 et une unité de traitement 73 pour desservir la pluralité de capteurs optiques 3.

L'unité d'acquisition 71 est configurée pour convertir les signaux électriques S1-Sn en un signal numérique brut N0 avant de le transmettre à l'unité de traitement 73. Plus particulièrement, l'unité d'acquisition 71 comporte un multiplexeur et un convertisseur analogique-numérique. Il est configuré pour acquérir les signaux électriques S1-Sn représentatifs de la répartition de l'éclairement sur la surface libre de chacun des capteurs optiques 3 et pour transformer ces signaux électriques S1-Sn en un signal numérique brut N0 relatif aux mesures courantes des orientations des pièces mobiles. Avantageusement, la fréquence d'acquisition utilisée est de l'ordre de 25 Hz afin de détecter les oscillations erratiques (ou bagottements) potentielles des pièces mobiles 5.

En effet, afin de pouvoir être transmises sans perte, les signaux électriques S1-Sn sont numérisés par exemple, chacun sur 10 bits (i.e. sur une échelle de 1024 valeurs possibles). Cette quantification sur 10 bits génère une petite imprécision introduisant un léger bruit de quantification. Ainsi, la précision de 1° du capteur optique 3 est tout simplement due au bruit de quantification.

Par ailleurs, l'unité de traitement 73 comporte un microcontrôleur configuré pour générer un signal numérique traité N1 comportant les mesures relatives aux orientations courantes des n pièces mobiles 5 montées sur les n capteurs optiques 3 ainsi que les positions prédéterminées des capteurs optiques 3.

Avantageusement, le système de mesure comporte une interface de visualisation 75, un dispositif d'enregistrement 77, et un dispositif d'émission 79.

Le signal numérique traité N1 peut ensuite être transmis à l'interface de visualisation 75 (par exemple, un écran) et/ou aux dispositifs d'enregistrement 77 et d'émission 79. Ainsi, on peut visualiser en temps réel sur un écran 75, les positions des capteurs optiques 3 sur la paroi 9 ainsi que les orientations courantes des pièces mobiles 5 correspondantes. Le signal numérique traité N1 peut aussi être enregistré dans le dispositif d'enregistrement 77 (par exemple, une mémoire ou base de données).

Avantageusement, le signal numérique traité N1 comportant les données relatives aux orientations d'une ou de plusieurs pièces mobiles 5 peut être transmis en temps réel par le dispositif d'émission 79 à un centre d'analyse pour être analysé en temps réel.

En outre, le système 1 de mesure peut lui-même comporter un dispositif d'analyse 81 (par exemple un ordinateur ou un calculateur) configuré pour déterminer les paramètres aérodynamiques de la paroi 9 en fonction des positions prédéterminées des capteurs 3 et des orientations courantes des pièces mobiles 5 définies par le signal numérique traité N1. Ces paramètres comprennent l'état de l'écoulement pariétal et la direction des lignes de courant pariétales.

L'état de l'écoulement pariétal peut être classé selon trois états qui sont respectivement, les états stable, instable et décollé. Le critère pour différencier le comportement de l'écoulement est basé sur l'étendue de la plage angulaire dans laquelle la pièce mobile 5 se trouve à un moment donné. L'écoulement peut être considéré comme instable dès que cette plage angulaire s'éloigne de façon significative d'une plage nulle et décollée dès que cette plage angulaire est supérieure à +/- 35°.

En outre, la direction des lignes de courant pariétales permet de caractériser l'écoulement de façon locale et globale avec une très grande précision.

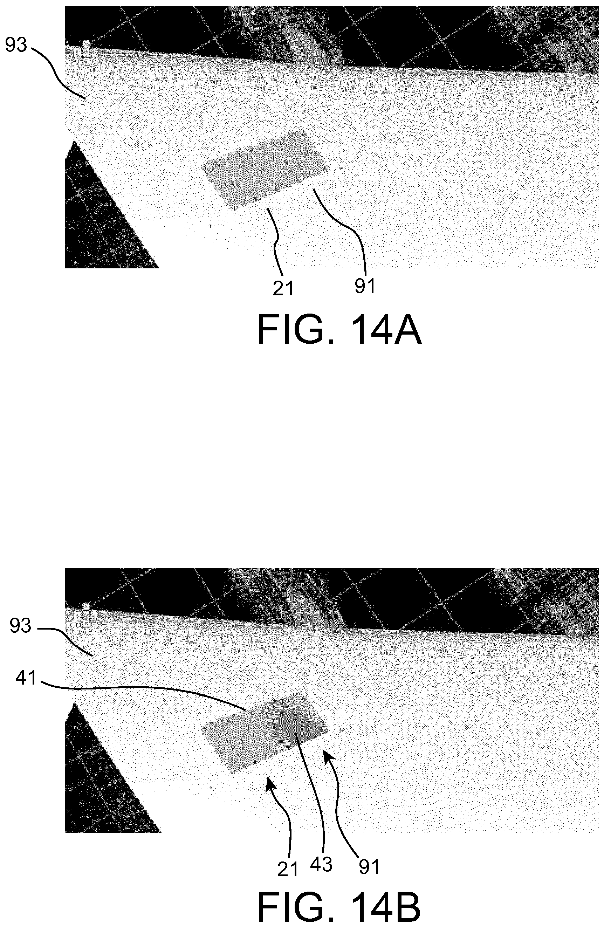

La Fig. 14A illustre de manière schématique un module de mesure installé sur un aéronef, selon un mode de réalisation de l'invention.

Au moins un module 21 de mesure est installé sur au moins une zone d'intérêt 91 de l'aéronef 93 destinée à être analysée lors d'un essai en vol. Les modules 21 de mesure peuvent être collés (par exemple, au moyen d'un ruban adhésif double face) sur les surfaces de dessus et/ou de dessous de l'aéronef 93 telles que les ailes et le fuselage. Lorsqu'un module de mesure 21 est installé, la position du repère de référence du module 21 est déterminée en fonction du repère de l'aéronef par exemple par géolocalisation, par laser de poursuite, ou tout simplement par mesure au mètre ruban.

On notera qu'un module de mesure 21 peut comporter un ou plusieurs dispositif(s) 1 de mesures. Il est à noter aussi que des dispositifs 1 de mesures peuvent aussi être collés individuellement sur différentes parties de l'aéronef.

Les signaux électriques issus des différents capteurs optiques 3 sont transmis à un dispositif embarqué d'acquisition et de traitement. Ce dispositif délivre un signal numérique traité N1 comportant les positions prédéterminées des capteurs optiques 3 sur la zone d'intérêt 91 ainsi que les orientations courantes (i.e. instantanées) des pièces mobiles 5. Le signal numérique traité N1 peut être enregistré dans un moyen de stockage embarqué et peut aussi être visualisé en temps réel sur un écran.

En outre, le signal numérique traité N1 peut être analysé en temps réel par un dispositif d'analyse embarqué. En effet, à partir du signal numérique traité N1, le dispositif d'analyse construit des indicateurs basés sur la position et l'orientation de chaque pièce mobile 5 en fonction du temps. Ces indicateurs comportent par exemple, l'angle de la pièce mobile 5 en fonction du repère de référence et le taux de variation de l'orientation de la pièce mobile 5 en fonction du temps. Ces indicateurs permettent d'analyser l'état de l'écoulement et de plus, permettent d'analyser les lignes de courant à la surface de l'aéronef sachant que la direction indiquée par chaque pièce mobile 5 est tangente à la ligne de courant de l'écoulement. Ces deux types d'analyses peuvent être combinés pour avoir une représentation de l'écoulement sur un modèle numérique de l'aéronef.

En effet, la Fig. 14B illustre une analyse combinant l'état de l'écoulement et les lignes de courant. Les traits 41 représentent les directions des lignes de courant à l'endroit des pièces mobiles et en couleur (ici représenté par une tache grise 43) l'état de l'écoulement qui est fonction de l'indicateur défini. Ici le niveau de gris reflète le niveau d'agitation de chaque pièce mobile.

En variante, étant donné que le signal numérique traité N1 comporte un nombre limité de données (i.e. positions constantes des capteurs optiques et orientations courantes des pièces mobiles), ce signal peut être facilement transmis au sol en temps réel par un dispositif embraqué d'émission pour être ensuite analysé en temps réel par des spécialistes au sol. Bien entendu, l'analyse peut aussi être réalisée en temps différé après l'atterrissage de l'aéronef.

## Revendications

1. Dispositif de mesure aérodynamique d'un écoulement d'air le long d'une paroi, comportant :
- un capteur optique (3) configuré pour détecter un éclairement en lumière ambiante et pour mesurer une répartition dudit éclairement sur une surface libre dudit capteur optique, et
- une pièce (5) montée mobile sur ledit capteur optique en recouvrant partiellement sa surface libre, ladite pièce, appelée pièce mobile (5), comportant une partie plane (51) recouvrant une partie de la surface libre du capteur optique (3) et une ailette (53) disposée perpendiculairement sur la partie plane, ladite partie plane (51) ayant la forme d'un secteur angulaire délimité par deux rayons formant entre eux un angle supérieur à 5°, ladite pièce mobile (5) étant adaptée pour s'orienter librement selon l'écoulement d'air local modulant ainsi la répartition de l'éclairement sur ladite surface libre de sorte qu'une mesure courante par le capteur optique de la répartition de l'éclairement indique l'orientation courante de ladite pièce mobile représentative de l'écoulement courant d'air caractérisant l'écoulement pariétal.

2. Dispositif selon la revendication 1, **caractérisé en ce que** le capteur optique (3) comprend un photo-détecteur (31) en forme d'anneau constitué d'un nombre prédéterminé de pistes (31a-31d) détectrices de lumière et délivrant des signaux représentatifs de l'éclairement reçu par chacune des pistes générant ainsi la mesure de la répartition de l'éclairement sur la surface libre du capteur optique.

3. Dispositif selon la revendication 1 ou 2, **caractérisé en ce que** le capteur optique est constitué de composants électroniques organiques imprimés et **en ce que** ledit capteur optique présente une précision de mesure angulaire de l'ordre de 1° à 5°.

4. Dispositif selon l'une quelconque des revendications précédentes, **caractérisé en ce que** ledit angle est égal à 180°.

5. Module de mesure comprenant au moins un dispositif de mesure selon l'une quelconque des revendications précédentes.

6. Module de mesure selon la revendication 5, **caractérisé en ce qu'**il comporte un substrat (23) sur lequel est disposé ledit au moins un dispositif de mesure.

7. Système de mesure aérodynamique en temps réel des écoulements d'air le long d'une paroi, comportant au moins un module de mesure selon la revendication 5 ou 6, **caractérisé en ce que** chaque module de mesure étant adapté pour être installé selon une position prédéterminée sur une zone d'intérêt de ladite paroi (9) de sorte que les mesures générées par le ou les capteur(s) optique(s) appartenant au module de mesure sont représentatives de l'aérodynamique de la paroi.

8. Système selon la revendication 7, **caractérisé en ce qu'**il comporte des unités (7) d'acquisition et de traitement configurées pour acquérir la mesure courante de chaque capteur optique et pour la transformer en une mesure numérique courante (N1) définissant l'orientation courante de la pièce mobile montée sur le capteur optique correspondant.

9. Système selon la revendication 7 ou 8, **caractérisé en ce qu'**il comporte un dispositif d'émission configuré pour émettre en temps réel des données relatives aux orientations d'au moins une pièce mobile montée sur au moins un capteur optique appartenant au module de mesure.

10. Système selon l'une quelconque des revendications 7 à 9, **caractérisé en ce qu'**il comporte une interface de visualisation (75) configurée pour visualiser en temps réel les orientations d'au moins une pièce mobile appartenant au module de mesure.

11. Système selon l'une quelconque des revendications 7 à 10, **caractérisé en ce qu'**il comprend un dispositif d'analyse (81) configuré pour déterminer des paramètres aérodynamiques de la paroi (9) comprenant l'état de l'écoulement pariétal et la direction des lignes de courant pariétales en fonction de la position du module de mesure et des orientations d'au moins une pièce mobile appartenant au module de mesure.

12. Aéronef comportant un système de mesure selon l'une quelconque des revendications 7 à 11.

## Patentansprüche

1. Vorrichtung zur aerodynamischen Messung einer Luftströmung entlang einer Wand, umfassend:
- einen optischen Sensor (3), der dazu ausgestaltet ist, eine Umgebungslicht-Beleuchtungsstärke zu detektieren und eine Verteilung der Beleuchtungsstärke auf einer freien Oberfläche des optischen Sensors zu messen, und
- ein Teil (5), das beweglich auf dem optischen Sensor montiert ist, wobei es dessen freie Oberfläche teilweise abdeckt, wobei das Teil, bewegliches Teil (5) genannt, einen flachen Abschnitt (51), der einen Teil der freien Oberfläche des optischen Sensors (3) abdeckt, und einen senkrecht zu dem flachen Abschnitt angeordneten Flügel (53) umfasst, wobei der flache Abschnitt (51) die Form eines Winkelsegments hat, das durch zwei Radien begrenzt wird, die untereinander einen Winkel von mehr als 5° bilden, wobei das bewegliche Teil (5) dazu eingerichtet ist, sich entsprechend der lokalen Luftströmung frei auszurichten und dadurch die Verteilung der Beleuchtungsstärke auf der freien Oberfläche so zu modulieren, dass eine aktuelle Messung der Verteilung der Beleuchtungsstärke durch den optischen Sensor die aktuelle Ausrichtung des beweglichen Teils angibt, die für die aktuelle, die Wandströmung kennzeichnende Luftströmung repräsentativ ist.

2. Vorrichtung nach Anspruch 1, **dadurch gekennzeichnet, dass** der optische Sensor (3) einen Fotodetektor (31) in Form eines Rings umfasst, der aus einer vorbestimmten Anzahl von Bahnen (31a-31d) besteht, die Licht detektieren und Signale ausgeben, die für die von jeder der Bahnen empfangenen Beleuchtungsstärke repräsentativ sind und so die Messung der Verteilung der Beleuchtungsstärke auf der freien Oberfläche des optischen Sensors generieren.

3. Vorrichtung nach Anspruch 1 oder 2, **dadurch gekennzeichnet, dass** der optische Sensor aus gedruckten organischen elektronischen Bauelementen besteht und dass der optische Sensor eine Winkelmessgenauigkeit in der Größenordnung von 1° bis 5° aufweist.

4. Vorrichtung nach einem der vorhergehenden Ansprüche, **dadurch gekennzeichnet, dass** der Winkel 180° beträgt.

5. Messmodul mit mindestens einer Messvorrichtung nach einem der vorhergehenden Ansprüche.

6. Messmodul nach Anspruch 5, **dadurch gekennzeichnet, dass** es ein Substrat (23) umfasst, auf dem die mindestens eine Messvorrichtung angeordnet ist.

7. System zur aerodynamischen Echtzeitmessung der Luftströmungen entlang einer Wand, das mindestens ein Messmodul nach Anspruch 5 oder 6 umfasst, **dadurch gekennzeichnet, dass** jedes Messmodul geeignet ist, entsprechend einer vorbestimmten Position in einem Bereich von Interesse der Wand (9) angebracht zu werden, so dass die von dem (den) zum Messmodul gehörenden optischen Sensor(en) erzeugten Messungen repräsentativ für die Aerodynamik der Wand sind.

8. System nach Anspruch 7, **dadurch gekennzeichnet, dass** es Erfassungs- und Verarbeitungseinheiten (7) umfasst, die dazu ausgestaltet sind, die aktuelle Messung jedes optischen Sensors zu erfassen und sie in eine aktuelle numerische Messung (N1) umzuwandeln, die die aktuelle Ausrichtung des am betreffenden optischen Sensor montierten beweglichen Teils definiert.

9. System nach Anspruch 7 oder 8, **dadurch gekennzeichnet, dass** es eine Sendevorrichtung umfasst, die dazu ausgestaltet ist, in Echtzeit Daten bezüglich der Ausrichtungen mindestens eines beweglichen Teils, das an mindestens einem zum Messmodul gehörenden optischen Sensor montiert ist, zu senden.

10. System nach einem der Ansprüche 7 bis 9, **dadurch gekennzeichnet, dass** es eine Anzeigeschnittstelle (75) umfasst, die dazu ausgestaltet ist, die Ausrichtungen mindestens eines zum Messmodul gehörenden beweglichen Teils in Echtzeit anzuzeigen.

11. System nach einem der Ansprüche 7 bis 10, **dadurch gekennzeichnet, dass** es eine Analysevorrichtung (81) umfasst, die dazu ausgestaltet ist, aerodynamische Parameter der Wand (9) zu bestimmen, die den Zustand der Wandströmung und die Richtung der Wandströmungslinien in Abhängigkeit von der Position des Messmoduls und der Ausrichtung mindestens eines zum Messmodul gehörenden beweglichen Teils umfassen.

12. Flugzeug mit einem Messsystem nach einem der Ansprüche 7 bis 11.

## Claims

1. Device for aerodynamically measuring a flow of air along a wall, including:
- an optical sensor (3) configured to detect an illuminance by ambient light and to measure the distribution of said illuminance over a free surface of said optical sensor, and
- a member (5) movably mounted on said optical sensor and partially covering its free surface, said member (5), called the mobile member, including a plane part (51) covering a part of the free surface of the optical sensor (3) and a fin (53) disposed perpendicularly on the plane part, said plane part (51) having the shape of an angular sector delimited by two radii forming between them an angle greater than 5°, said mobile member (5) being adapted to be freely oriented with the local flow of air, thereby modulating the distribution of the illuminance over said free surface so that a current measurement by the optical sensor of the distribution of the illuminance indicates the current orientation of said mobile member representing the current flow of air characterizing the parietal flow.

2. Device according to Claim 1, **characterized in that** the optical sensor (3) comprises an annular photodetector (31) consisting of a predetermined number of light-detecting tracks (31a-31d) and delivering signals representing the illuminance received by each of the tracks, thereby generating the measurement of the distribution of the illuminance over the free surface of the optical sensor.

3. Device according to Claim 1 or 2, **characterized in that** the optical sensor consists of printed organic electronic components and **in that** said optical sensor has an angular measurement accuracy of the order of 1° to 5°.

4. Device according to any one of the preceding claims, **characterized in that** said angle is equal to 180°.

5. Measuring module comprising at least one measuring device according to any one of the preceding claims.

6. Measuring module according to Claim 5, **characterized in that** it includes a substrate (23) on which said at least one measuring device is disposed.

7. System for aerodynamically measuring in real time flows of air along a wall, including at least one measuring module according to Claim 5 or 6, **characterized in that** each measuring module is adapted to be installed in a predetermined position on an area of interest of said wall (9) so that the measurements generated by the optical sensor or sensors of the measuring module represent the aerodynamics of the wall.

8. System according to Claim 7, **characterized in that** it includes acquisition and processing units (7) configured to acquire the current measurement from each optical sensor and to convert it into a current digital measurement (N1) defining the current orientation of the mobile member mounted on the corresponding optical sensor.

9. System according to Claim 7 or 8, **characterized in that** it includes an emission device configured to emit in real time data relating to the orientations of at least one mobile member mounted on at least one optical sensor of the measuring module.

10. System according to any one of Claims 7 to 9, **characterized in that** it includes a visualization interface (75) configured to visualize in real time the orientations of at least one mobile member of the measuring module.

11. System according to any one of Claims 7 to 10, **characterized in that** it comprises an analysis device (81) configured to determine aerodynamic parameters of the wall (9) comprising the status of the parietal flow and the direction of the parietal current lines as a function of the position of the measuring module and the orientations of at least one mobile member of the measuring module.

12. Aircraft including a measuring system according to any one of Claims 7 to 11.
